# EUROPÄISCHE PATENTANMELDUNG

(11) **EP 2 857 177 A1**
(43) Veröffentlichungstag der Anmeldung: **08.04.2015**
(21) Anmeldenummer: 13186872.1
(22) Anmeldetag: 01.10.2013
(51) Int. Cl.: B29C 67/00, B22F 3/105

(54) **Verfahren zum schichtweisen Aufbau eines dreidimensionalen Bauteils sowie Vorrichtung zur Durchführung des Verfahrens**

(71) Anmelder: Siemens Aktiengesellschaft, 80333 München (DE)
(72) Erfinder: Clossen-von Lanken Schulz, Michael, 47661 Issum (DE); Kadau, Kai, Clover, South Carolina 29710 (US); Obermayr, Stefan, 45475 Mülheim (DE)

(57) **Zusammenfassung**

Die Erfindung betrifft ein Verfahren zum schichtweisen Aufbau eines dreidimensionalen Bauteils (2, 3), bei dem auf eine definierte Vorwärmtemperatur erwärmtes sinterfähiges Pulvermaterial (8) unter Verwendung eines Laserstrahls (16) lokal Schicht für Schicht gesintert wird, wobei das Sintern des Pulvermaterials (8) unter einem gegenüber dem Umgebungsdruck verminderten Arbeitsdruck erfolgt. Darüber hinaus betrifft die Erfindung eine Vorrichtung (1) zur Durchführung des Verfahrens.

## Beschreibung

Die vorliegende Erfindung betrifft ein Verfahren zum schichtweisen Aufbau eines dreidimensionalen Bauteils, bei dem ein auf eine definierte Vorwärmtemperatur erwärmtes sinterfähiges Pulvermaterial unter Verwendung eines Laserstrahls lokal Schicht für Schicht gesintert wird. Ferner betrifft die vorliegende Erfindung eine Vorrichtung zur Durchführung eines solchen Verfahrens, umfassend eine Arbeitskammer, eine in der Arbeitskammer angeordnete Trägerplatte, eine Pulvermaterialzuführeinrichtung zum Auftragen von Pulvermaterial auf die Trägerplatte, wenigstens eine Wärmequelle zur Erwärmung des Pulvermaterials auf die definierte Vorwärmtemperatur und einen Laser.

Ein Verfahren der eingangs genannten Art wird auch als selektives Lasersintern (SLS) bezeichnet. Dabei handelt es sich um ein 3D-Druckverfahren, bei dem räumliche Strukturen durch Sintern eines sinterfähigen Pulvermaterials Schicht für Schicht aufgebaut werden. Bearbeiten lassen sich unterschiedlichste Materialien. So kann das Pulvermaterial beispielsweise Kunststoffe, Metalle oder Keramiken enthalten.

Die Generierung eines dreidimensionalen Bauteils erfolgt, indem sukzessive jede Schicht des Pulvermaterials einer zum lokalen Sintern führenden Energie eines Laserstrahls ausgesetzt wird, wobei der Laserstrahl entsprechend der gewünschten Kontur über die jeweilige Pulvermaterialschicht bewegt wird. Der Laserstrahl schmilzt die im Bearbeitungsbereich angeordneten Pulvermaterialkörner zumindest an, woraufhin diese zur Bildung einer Bauteilschicht eine feste Verbindung eingehen. Nach der Herstellung einer ersten Bauteilschicht wird auf diese eine neue Pulvermaterialschicht aufgetragen und die zweite Bauteilschicht gesintert. Analog werden die nachfolgenden Bauteilschichten generiert, bis das gewünschte dreidimensionale Bauteil fertiggestellt ist.

Der Aufbau der einzelnen Bauteilschichten erfolgt auf einer in einer Arbeitskammer angeordneten Trägerplatte, auf die das Pulvermaterial unter Verwendung einer Pulvermaterialzuführeinrichtung Schicht für Schicht aufgetragen wird. Die Pulvermaterialzuführeinrichtung weist häufig ein Rakel oder eine Walze auf, um das Pulvermaterial auf der Trägerplatte vollflächig mit kontinuierlicher Dicke aufzutragen, wobei die Auftragsdicke normalerweise im Bereich von 0,001 bis 0,2 mm liegt. Die Pulvermaterialzuführeinrichtung und die Trägerplatte sind normalerweise relativ zueinander beweglich angeordnet. Meist kann die Trägerplatte gegenüber der Pulvermaterialzuführeinrichtung abgesenkt werden, um den für den Auftrag der nachfolgenden Pulvermaterialschicht erforderlichen Raum zu schaffen.

Als Laser können beispielsweise CO₂-Laser, Nd:YAG-Laser oder Faserlaser zum Einsatz kommen.

Um während der Generierung eines Bauteils eine Oxidation des Pulvermaterials zu vermeiden, wird der Sinterprozess normalerweise in einer Schutzgasatmosphäre durchgeführt. Als Schutzgas kommen insbesondere Inertgase zum Einsatz, wie beispielsweise Stickstoff.

Um zu verhindern, dass während des Sinterprozesses aufgrund großer Temperaturschwankungen unzulässig hohe Eigenspannungen in das zu fertigende Bauteil eingebracht werden, werden das das zu sinternde Pulvermaterial ebenso wie bereits hergestellte Bauteilschichten vor jedem Sinterschritt auf eine definierte einheitliche Vorwärmtemperatur gebracht. Zu diesem Zweck ist wenigstens eine separate Heizeinrichtung vorgesehen.

Wegen des hohen maschinellen Aufwands und der vergleichsweise langen Fertigungsdauern wird das selektive Lasersintern in erster Linie zur Herstellung von Prototypen und bei der Kleinserienfertigung von Bauteilen mit kompliziertem Aufbau eingesetzt. Ebenso findet diese Technologie Anwendung bei Bauteilen, die sich aufgrund von Hinterschneidungen nur schichtweise aufbauen lassen. Der Trend geht allerdings dahin, das selektive Lasersintern auch als Rapid-Manufacturing bzw. als Rapid-Tooling-Verfahren zur schnellen Herstellung von Werkzeugen und Funktionsbauteilen zu nutzen. Beispielsweise ist es bekannt, Zahnersatz mittels selektivem Lasersintern zu fertigen, wie Kronen, Inlays, Brücken oder dergleichen.

Ein Nachteil bekannter selektiver Lasersinterverfahren und bekannter Vorrichtungen zur Durchführung dieser Verfahren besteht darin, dass das Erwärmen des Pulvermaterials und gegebenenfalls der bereits erzeugten Bauteilschichten auf eine definierte Vorwärmtemperatur sehr viel Zeit in Anspruch nimmt, was mit hohen Kosten einhergeht.

Ausgehend von diesem Stand der Technik ist es eine Aufgabe der vorliegenden Erfindung, ein Verfahren und eine Vorrichtung der eingangs genannten Art zu schaffen, mit denen kurze Aufheizphasen auf eine definierte Vorwärmtemperatur realisierbar sind.

Zur Lösung dieser Aufgabe schafft die vorliegende Erfindung ein Verfahren der eingangs genannten Art, das dadurch gekennzeichnet ist, dass das Sintern des Pulvermaterials unter einem gegenüber dem Umgebungsdruck verminderten Arbeitsdruck erfolgt, insbesondere unter Vakuum.

Das Sintern unter einem gegenüber dem Umgebungsdruck verminderten Arbeitsdruck ist gegenüber einem Sintern unter Schutzgasatmosphäre dahingehend von Vorteil, dass die durch das die Arbeitskammer füllende Schutzgas stattfindende thermische Konvektion entfällt oder zumindest stark verringert wird. Entsprechend wird in der Vorwärmphase keine oder weniger Wärme von dem auf die definierte Vorwärmtemperatur zu erwärmenden Pulvermaterial an die benachbart angeordneten Bauteile der Lasersintervorrichtung abgegeben, was zu erheblich kürzeren Aufheizphasen führt. Auf diese Weise können vorteilhaft kurze Fertigungszeiten erzielt werden.

Gemäß einer Ausgestaltung der vorliegenden Erfindung erfolgt die Erwärmung des Pulvermaterials auf die definierte Vorwärmtemperatur induktiv und/oder mittels Infrarotstrahlung. Dies bringt den Vorteil mit sich, dass das Pulvermaterial sehr gezielt und innerhalb kurzer Zeit auf die definierte Vorwärmtemperatur gebracht werden kann.

Zur Lösung der eingangs genannten Aufgabe schafft die vorliegende Erfindung ferner eine Vorrichtung zur Durchführung eines Verfahrens der zuvor beschriebenen Art, umfassend eine Arbeitskammer, eine in der Arbeitskammer angeordnete Trägerplatte, eine Pulvermaterialzuführeinrichtung zum Auftragen von Pulvermaterial auf die Trägerplatte, wenigstens eine Heizeinrichtung zur Erwärmung des Pulvermaterials auf die definierte Vorwärmtemperatur und einen Laser, wobei die Vorrichtung erfindungsgemäß dadurch gekennzeichnet ist, dass eine mit der Arbeitskammer wirksam verbundene Unterdruckerzeugungseinrichtung vorgesehen ist, insbesondere in Form einer Vakuumpumpe.

Als Heizeinrichtung ist vorteilhaft zumindest eine Induktionsheizung vorgesehen, welche bevorzugt derart ausgestaltet und angeordnet ist, dass sie die Trägerplatte und/oder das auf dieser vorhandene Pulvermaterial direkt erwärmt.

Alternativ oder zusätzlich kann eine Heizeinrichtung in Form zumindest eines Infrarotstrahlers vorgesehen sein.

Als Laser wird bevorzugt ein CO₂-Laser, ein Nd:YAG-Laser oder ein Faserlaser eingesetzt.

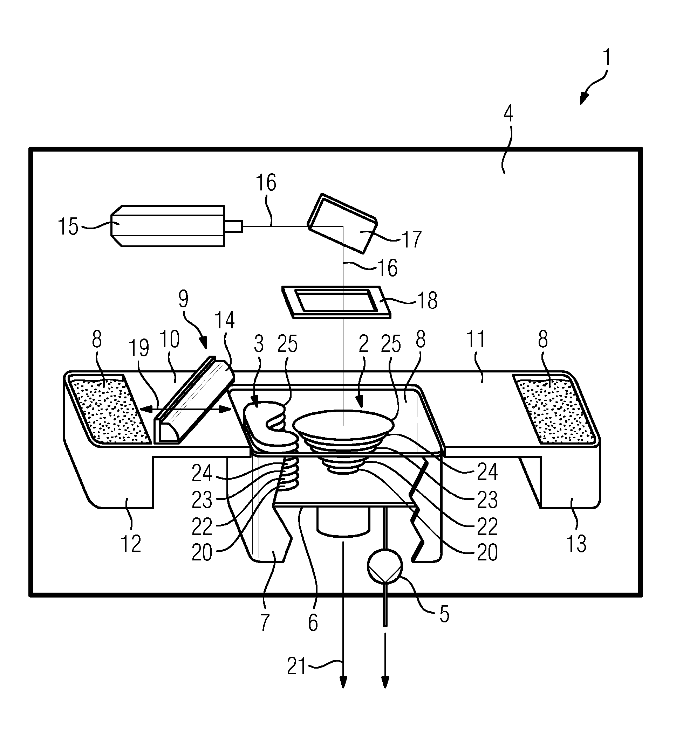

Weitere Merkmale und Vorteile der vorliegenden Erfindung werden anhand der nachfolgenden Beschreibung einer Ausführungsform einer erfindungsgemäßen Vorrichtung unter Bezugnahme auf die beiliegende Zeichnung deutlich.

Die Zeichnung zeigt eine schematische perspektive Ansicht einer Vorrichtung 1 gemäß einer Ausführungsform der vorliegenden Erfindung, die zum schichtweisen Aufbau von dreidimensionalen Bauteilen 2, 3 dient. Die Vorrichtung 1 umfasst eine Arbeitskammer 4, die unter Verwendung einer Unterdruckerzeugungseinrichtung 5 evakuierbar ist, wobei die Unterdruckerzeugungseinrichtung 5 vorliegend als Vakuumpumpe ausgebildet ist. Innerhalb der Arbeitskammer 4 ist eine vertikal auf- und abwärts bewegbare Trägerplatte 6 angeordnet, die aus Metall hergestellt ist, wobei grundsätzlich auch andere Materialien zur Ausbildung der Trägerplatte 6 verwendet werden können. Entlang des Umfangs der Trägerplatte 6 erstreckt sich eine Induktionsheizung 7, mit der die Trägerplatte 6 und auf dieser angeordnetes Pulvermaterial 8 direkt erwärmt werden können, wie es nachfolgend noch näher erläutert ist. Die Vorrichtung 1 umfasst ferner eine Pulvermaterialzuführeinrichtung 9 mit zwei sich beidseitig an die Trägerplatte 6 anschließenden Arbeitsflächen 10, 11, zwei sich an die Arbeitsflächen 10, 11 anschließenden Pulvermaterialreservoirs 12, 13 sowie einem Rakel 14, das horizontal zwischen den Pulvermaterialreservoirs 12, 13 hin und her bewegt werden kann und dazu dient, in den Pulvermaterialreservoirs 12, 13 enthaltenes Pulvermaterial 8 über die Arbeitsflächen 10, 11 zu bewegen und vollflächig mit kontinuierlicher Dicke auf der Trägerplatte 6 aufzutragen. Die Pulvermaterialreservoirs 12, 13 ebenso wie die Arbeitsflächen 10, 11 können wahlweise über eine Heizeinrichtung vorgewärmt werden, auch wenn eine solche in der Zeichnung nicht dargestellt ist. Eine weitere Komponente der Vorrichtung 1 bildet ein Laser 15, bei dem es sich vorliegend um einen CO₂-Laser handelt. Es sollte allerdings klar sein, dass anstelle eines CO₂-Lasers beispielsweise auch ein Nd:YAG-Laser oder ein Faserlaser verwendet werden kann. Ein den Laser 15 verlassender Laserstrahl 16 wird über eine Scannereinrichtung 17 in Richtung der Trägerplatte 6 umgelenkt. Die Scannereinrichtung 17 ist derart ausgebildet und eingerichtet, dass der Laserstrahl 16 auf jede Position der Trägerplatte 6 gerichtet werden kann. Oberhalb der Trägerplatte 6 ist eine weitere Heizeinrichtung in Form eines Infrarotstrahlers 18 vorgesehen, der zur Erwärmung der Trägerplatte 6 bzw. des auf der Trägerplatte 6 angeordneten Pulvermaterials 8 dient.

Zur Erzeugung eines dreidimensionalen Bauteils 2, 3 wird in einem ersten Schritt die Arbeitskammer 4 unter Verwendung der Vakuumpumpe 5 evakuiert. Daraufhin wird die Trägerplatte 6 in eine obere Position verfahren, in der sie geringfügig unterhalb der Arbeitsflächen 10, 11 angeordnet ist. Anschließend wird eine Schicht des in einem der Pulvermaterialreservoirs 12 oder 13 enthaltenen Pulvermaterials 8 vollflächig mit kontinuierlicher Dicke auf der Trägerplatte 6 aufgetragen. Hierzu wird das Rakel 14 in Richtung des Pfeils 19 von einem Pulvermaterialreservoir 12 zum anderen Pulvermaterialreservoir 13 über die Arbeitsflächen 10, 11 und die Trägerplatte 6 bewegt. Die Auftragsdicke kann in Abhängigkeit von dem herzustellenden Bauteil im Bereich von 0,001 bis 0,2 mm variieren. Bei dem Pulvermaterial 8 handelt es sich um ein sinterfähiges Pulvermaterial, das - ebenfalls in Abhängigkeit von dem herzustellenden Bauteil - Kunststoffe, Metalle oder Keramiken enthalten kann. Nach Auftragen der Pulvermaterialschicht auf die Trägerplatte 6 werden die Trägerplatte 6 und die darauf befindliche Pulvermaterialschicht auf eine vorab definierte Vorwärmtemperatur unter Verwendung der Induktionsheizung 7 und des Infrarotstrahlers 18 erwärmt. Die Vorwärmtemperatur ist dabei derart gewählt, dass sich bei der sich nachfolgenden Sinterbearbeitung kein nachteiliger Bauteilverzug aufgrund von Eigenspannungen einstellt. Anschließend wird die Scannereinrichtung 17 derart angesteuert, dass der von dem Laser 15 emittierte Laserstrahl 16 auf der Trägerplatte 6 eine vorab programmierte Kontur abfährt, die der Kontur der herzustellenden Bauteilschicht entspricht. Der Laserstrahl 16 schmilzt die Partikel des Pulvermaterials 8 zumindest teilweise auf, wodurch zwischen diesen ein fester Verbund erzeugt wird. Nach dem Verfestigen der ersten Bauteilschicht 20 wird die Trägerplatte 6 in Richtung des Pfeils 21 um ein Maß abgesenkt, das im Wesentlichen der Dicke der nachfolgend herzustellenden Bauteilschicht 22 entspricht. Daraufhin wird unter Verwendung des Rakels 14 eine weitere Schicht des Pulvermaterials 8 auf der Trägerplatte 6 und somit auf der ersten Bauteilschicht 20 aufgetragen. Die Trägerplatte 6, das Pulvermaterial 8 ebenso wie die bereits gesinterte erste Bauteilschicht 20 werden daraufhin unter Verwendung der Induktionsheizung 7 und des Infrarotstrahlers 18 auf die vorab definierte Vorwärmtemperatur erwärmt, woraufhin die zweite Bauteilschicht 22 gesintert wird. Analog werden die nachfolgenden Bauteilschichten 23, 24, 25 generiert, bis das gewünschte dreidimensionale Bauteil 2, 3 fertiggestellt ist.

Ein wesentlicher Vorteil der erfindungsgemäßen Vorrichtung 1 besteht darin, dass der Sinterprozess bei einem Arbeitsdruck erfolgt, der gegenüber dem Umgebungsdruck vermindert ist, insbesondere unter Vakuum. Dies führt dazu, dass aufgrund mangelnder oder nur geringfügiger Konvektion das Erwärmen der Trägerplatte 6 bzw. des darauf angeordneten Pulvermaterials 8 schnell ohne große Zeitverluste durchgeführt werden kann, was im Hinblick auf die Fertigungszeiten sehr vorteilhaft ist.

Obwohl die Erfindung im Detail durch das bevorzugte Ausführungsbeispiel näher illustriert und beschrieben wurde, so ist die Erfindung nicht durch die offenbarten Beispiele eingeschränkt und andere Variationen können vom Fachmann hieraus abgeleitet werden, ohne den Schutzumfang der Erfindung zu verlassen.

## Patentansprüche

1. Verfahren zum schichtweisen Aufbau eines dreidimensionalen Bauteils (2, 3), bei dem auf eine definierte Vorwärmtemperatur erwärmtes sinterfähiges Pulvermaterial (8) unter Verwendung eines Laserstrahls (16) lokal Schicht für Schicht gesintert wird, **dadurch gekennzeichnet, dass** das Sintern des Pulvermaterials (8) unter einem gegenüber dem Umgebungsdruck verminderten Arbeitsdruck erfolgt.

2. Verfahren nach Anspruch 1,
**dadurch gekennzeichnet, dass**
das Sintern des Pulvermaterials (8) unter Vakuum erfolgt.

3. Verfahren nach einem der vorherigen Ansprüche,
**dadurch gekennzeichnet, dass**
die Erwärmung des Pulvermaterials (8) auf die definierte Vorwärmtemperatur induktiv und/oder mittels Infrarotstrahlung erfolgt.

4. Vorrichtung (1) zur Durchführung eines Verfahrens nach einem der vorherigen Ansprüche, umfassend eine Arbeitskammer (4), eine in der Arbeitskammer (4) angeordnete Trägerplatte (16), eine Pulvermaterialzuführeinrichtung (9) zum Auftragen von Pulvermaterial (8) auf die Trägerplatte (6), wenigstens eine Heizeinrichtung (7, 18) zur Erwärmung des Pulvermaterials (8) auf die definierte Vorwärmtemperatur und einen Laser (15), **dadurch gekennzeichnet, dass** eine mit der Arbeitskammer (4) wirkverbundene Unterdruckerzeugungseinrichtung (5) vorgesehen ist.

5. Vorrichtung (1) nach Anspruch 4,
**dadurch gekennzeichnet, dass**
als Unterdruckerzeugungseinrichtung (5) eine Vakuumpumpe vorgesehen ist.

6. Vorrichtung (1) nach Anspruch 4 oder 5,
**dadurch gekennzeichnet, dass**
als Heizeinrichtung (7) zumindest eine Induktionsheizung vorgesehen ist.

7. Vorrichtung (1) nach Anspruch 6,
**dadurch gekennzeichnet, dass**
die Induktionsheizung (7) derart ausgebildet und angeordnet ist, dass sie die Trägerplatte (6) und/oder das auf dieser angeordnete Pulvermaterial (8) direkt erwärmt.

8. Vorrichtung (1) nach einem der Ansprüche 4 bis 7, **dadurch gekennzeichnet, dass**
als Heizeinrichtung (18) zumindest ein Infrarotstrahler vorgesehen ist.

9. Vorrichtung (1) nach einem der Ansprüche 4 bis 8, **dadurch gekennzeichnet, dass**
als Laser (15) ein CO₂-Laser, ein Nd:YAG-Laser oder ein Faserlaser vorgesehen ist.
